# EUROPEAN PATENT SPECIFICATION

(11) **EP 0 587 300 B1**
(45) Date of publication and mention of the grant of the patent: **31.01.1996**
(21) Application number: 93306190.5
(22) Date of filing: 05.08.1993
(51) Int. Cl.: A47J 37/12

(54) **Fryers**
Fritiergeräte
Friteuses

(30) Priority: 12.08.1992 GB 9217090
(43) Date of publication of application: 16.03.1994
(73) Proprietor: MORPHY RICHARDS LIMITED, Mexborough, South Yorkshire S64 8AJ (GB)
(72) Inventor: Keig, Peter William, Lightwood, Stoke-On-Trent ST3 7HR (GB); Moore, James, Millhouse Green, Penistone (GB)
(74) Representative: Lawrence, Brian Richard

(56) References cited:
- EP-A- 0 008 838
- EP-A- 0 432 615
- DE-U- 9 116 210
- FR-A- 1 510 977
- FR-A- 2 657 516
- US-A- 2 868 112
- US-A- 3 508 485

## Description

This invention relates to fryers, and is particularly concerned with so-called deep fat fryers, particularly, but not necessarily exclusively, for use in a domestic context.

Ordinarily, domestic deep fat fryers comprise an outer casing predominantly of plastics material and provided with a means of electrical connection to a power source and appropriate switches an temperature control means, and within which is provided a metal tank to hold the fat, with a heating element suitably secured to the bottom of the tank such as by brazing, welding, or crimping. With conventional domestic deep fat fryers, the tank is permanently secured within the outer casing and the electrical connection between the heating element and the means of connection provided on the casing, is permanent.

This leaves such deep fat fryers difficult to clean. The unit as a whole cannot be immersed in water with the then consequent damage to the means of connecting the unit to a power source.

There have been previous proposals where a removable tank has been provided but which have involved the provision of an externally located plug/socket arrangement for the connection of a heating element to a power supply. This frequently leads to a dangerous situation where a lead to the power supply is left connected and the plug/socket disconnected and left lying loose on, for example, a work surface and left live. Such a fryer, according to the preamble of claim 1, is known from document FR-A-2 657 516.

The object of the present invention is to provide a fryer and particularly a domestic deep fat fryer, that avoids the aforesaid difficulty.

According to the present invention a fryer comprises an outer casing (2) having an open topped cavity therein closable by a lid (3), a removable inner tank (26) disposed in said cavity and within said casing (2), a means of locating the tank (26) within the casing (2), a means to facilitate the removal of the tank (26) from the casing (2), a heating element (24) located on the underside of said tank (26) and means (22,23) for making electrical connection to said heating element (24), characterised by electrical connector means (22) fixedly secured within said outer casing (2), co-operating connector means (23) on said heating element (24) for automatically mating with said fixed electrical connector means (22) as said tank (26) is inserted in said casing (2), and a thermostatic control device (18) fixedly secured within said casing (2) and having a part (20) thereof which contacts said tank (26), said thermostatic control device (18) being electrically connected between said fixed electrical connector means (22) and a fixed input electrical supply (16,17) to said deep fat fryer.

A disconnectable locking means may be provided, if required to secure the tank within the casing. The tank may, however, simply be located within the casing by providing an uppermost peripheral flange to rest on the top edge of the casing, and when the casing may be provided with detents on opposed edge or with hinged flaps in opposed sides to enable the tank flange to be accessed by the fingers of the user and to lift the tank clear of the housing. Alternatively, detents may be provided in the upper sector of opposed side walls of the tank, to enable the tank to be gripped and lifted clear of the housing.

The tank may be a relatively close sliding fit in the housing, or corresponding formations can be formed on the tank outer wall and housing inner wall to serve as guide means. Thus, with the heating element suitably secured to the outer face of the tank bottom, it may be provided with, such as, a fixed pin connection means to engage with cooperative socket means secured towards the bottom of the housing, which socket means are electrically connected through the wall of the housing to an appropriate power source. Alternatively, pin means secured to the ends of the heating element may be brought into engagement with spring-loaded contacts, that may be located within an appropriate casing secured within the housing, and the spring-loaded contact electrically connected through the wall of the housing to an appropriate power source.

Most desirably, a cut-out switch means is provided located inwardly of the housing and for contact by the tank. Thus, with the tank located within the housing, the cut-out switch means is activated to connect such as the socket means in the housing to the source of electrical power, and deactivated as the tank is lifted clear of the housing and before such as the socket means is exposed.

Naturally, the fryer of the invention is provided with all usual accessories, such as a removable basket with a hinged or detachable handle for the placement and removal of foodstuffs into and from the tank. Desirably, a means is provided whereby the basket can be lowered into the cooking medium (fat) in the tank and raised to a drainage position prior to the removal of the basket from the tank. Also as is usual an appropriate lid means is provided, which may be hinged and spring-loaded to an open condition. The lid means may also be provided with an inspection window such that with the fryer in use and the lid closed foodstuffs within the fryer can be observed. Further preferably, a condensation trap can be provided to the side of the housing to which the lid is hinged.

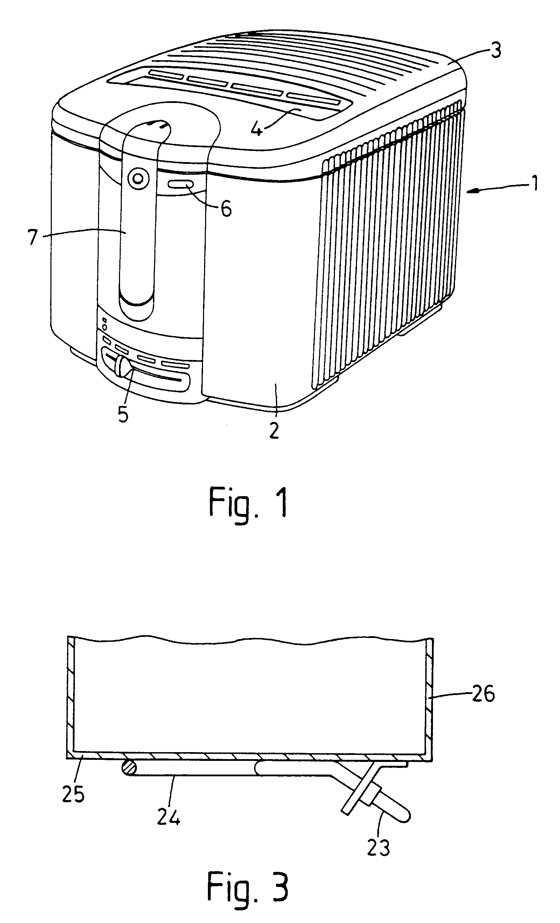

One embodiment of the invention will now be described in greater detail, by way of example only, with reference to the accompanying drawings, in which:-
Figure 1 is a perspective view of a fryer in accordance with the invention;
Figure 2 is an exploded perspective view of the fryer of Figure 1; and
Figure 3 is a sectional side elevation through the bottom sector of the removable tank of the fryer of Figure 1.

In the drawings, a fryer 1 comprises an outer casing 2 with a hinged lid 3, the hinged lid 3 having an inspection window 4. To the front of the outer casing 2 are appropriate heater/thermostat controls 5 and a catch 6 to hold the lid 3 in a closed condition and to enable the lid to be opened. Also to the front of the casing is the exposed handle 7 of a food basket as will be described in more detail below.

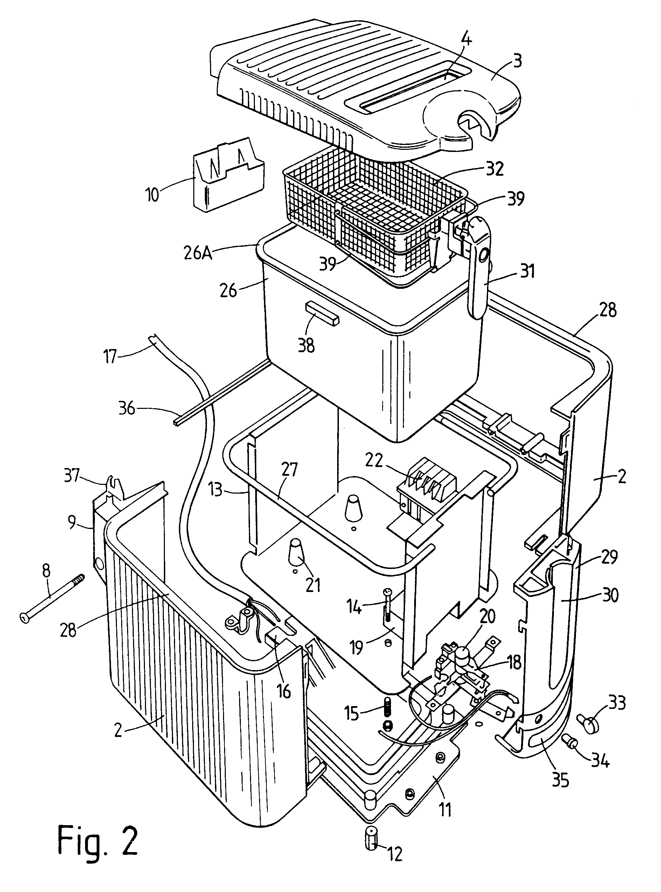

As is shown more particularly by Figure 2, the outer casing 2 is formed by two casing halves suitably secured together at the rearward end by bolts 8 extending through respective supports 9 on the casing halves, which combine to form a location for a condensation trap 10. The casing has a separate floor 11 suitably secured to the casing halves by appropriate bolts, and the separate floor provided on its outer face with strategically located feet 12. Within the casing is a support structure 13 secured in spaced relationship to the floor 11 by bolts 14 with interposed feet 15, to create a space within which is sited a terminal block 16 for an incoming power cable 17 passing through an appropriate hole in the rearward wall of the casing. From the terminal block 16, an electrical connection is provided to a combined thermostat and cut-out assembly 18 secured to the floor and overlaid by a cover 19 formed on the support structure 13, the cover 19 having an aperture through which the push button 20 of the cut-out switch extends.

Secured to the casing base are strategically located supports 21, and the socket assembly 22 for connection to a plug 23 of an electrical heating element 24 secured externally of the base 25 of a removable tank 26, as is more particularised in Figure 3.

To the upper end of the support structure 13 is a peripheral rail 27 to engage below an inwardly directed upper flange 28 of the casing, to provide added rigidity. The upper flange 28 forms a support member for an external peripheral flange 26A on the tank 26 to assist in the location of the tank in the casing.

To the forward end, the casing front wall is gapped and bridged by facing plate 29 to which the adjacent edges of the front wall parts are in clipped engagement. The facing plate 29 has a recess 30 in which lies a handle 31 of a wire basket 32, and to its lower end, the operating hand grip 33 of the thermostat and an illumination means 34, LED, bulb or neon are provided in a recess 35 to the lower end of the facing plate. To the rearward end of the casing, a pivot bar 36 is provided engaging in upstanding lugs 37 on the supports 9 and to which the lid 3 is pivotally secured.

Thus, with the lead 17 connected to mains and with the tank 26 in its position within the casing, the plug 23 is in engagement with the socket 22, and the cut-out button 20 depressed to provide an electrical connection from the lead mains to the heating element 24 attached to the tank. At the point that cleaning of the fryer is required, the basket 32 is removed, and the tank 26 lifted clear of the casing with the assistance of depressions 38 formed in opposed walls of the tank which can be gripped by the fingers of the user. As the tank is lifted clear, there is the automatic disconnection of the plug 23 from the socket 22, and the automatic closing of the cut-out assembly and whereby even if the cable 17 is left attached to mains, electrical supply to the exposed socket 22 is disconnected rendering it perfectly safe.

Following the cleaning of the tank it is simply replaced within the casing, the tank either being a close sliding fit with the inner wall of the casing, or there being provided spaced abutment means on the casing to engage the outer walls of the tank, and in either circumstance the guarantee that as the tank is lowered into the casing, there is the reconnection of the socket 22 and plug 23, and the reactivation of the cut-out assembly to reconnect the socket 22 to the mains lead 17.

As is shown by Figure 2, the wire basket 32 is provided with a hinged handle 31, the handle being connected to the basket by linkages 39. Thus with the basket installed within the tank, pivoting of the handle causes the basket, via the linkages, to be lowered into the fat in the tank, or raised out of the fat to a drainage position.

## Claims

1. A deep fat fryer comprising an outer casing (2) having an open topped cavity therein closable by a lid (3), a removable inner tank (26) disposed in said cavity and within said casing (2), a means of locating the tank (26) within the casing (2), a means to facilitate the removal of the tank (26) from the casing (2), a heating element (24) located on the underside of said tank (26) and means (22,23) for making electrical connection to said heating element (24), characterised by electrical connector means (22) fixedly secured within said outer casing (2), co-operating connector means (23) on said heating element (24) for automatically mating with said fixed electrical connector means (22) as said tank (26) is inserted in said casing (2), and a thermostatic control device (18) fixedly secured within said casing (2) and having a part (20) thereof which contacts said tank (26), said thermostatic control device (18) being electrically connected between said fixed electrical connector means (22) and a fixed input electrical supply (16,17) to said deep fat fryer.

2. A fryer as in Claim 1, characterised in that a disconnectable locking means is provided between the tank (26) and the casing (2).

3. A fryer as in Claim 1, characterised in that the tank (26) is located within the casing (2) by providing an uppermost peripheral flange (26A) to rest on the top edge of the casing (2).

4. A fryer as in Claim 3, characterised in that depressions (38) are formed in opposed walls of the tank (26) to facilitate the gripping of the tank.

5. A fryer as in Claim 3, characterised in that detents are formed in the top edge of the casing to enable the fingers to grip below the peripheral flange (26A) on the tank (26).

6. A fryer as in any of Claims 1 to 5, characterised in that the thermostatic control device (18) is a cut-out assembly (18) whereby placement of the tank (26) in the casing (2) deactivates the cut-out assembly (18) to provide an electrical connection from an incoming power cable (17) to the socket (22) and removal of the tank (26) from the casing (2) activates the cut-out assembly (18) to disconnect the socket from the incoming power cable (17).

7. A fryer as in any of Claim 1 to 6, characterised in that the thermostatic control device (18) is an adjustable thermostat (18, 33) to adjust power supply to the heating element (24).

8. A fryer as in any of Claims 1 to 7, characterised in that a removable wire basket (32) is provided within the tank (26) the wire basket having a pivotal handle (31) attached to the basket by linkages (39) and whereby with the basket located in the tank, it can be lowered into the fat and raised to a drainage position by pivoting the handle.

## Patentansprüche

1. Fritiergerät mit einem Außengehäuse (2) mit einem nach oben offenen Hohlraum, der darin mittels eines Deckels (3) schließbar ist, einem in dem Hohlraum und innerhalb des Gehäuses (2) angeordneten entfernbaren Innenbehälter (26), einer Einrichtung zur Anordnung des Behälters (26) innerhalb des Gehäuses (2), einer Einrichtung zur Erleichterung der Entfernung des Behälters (26) von dem Gehäuse (2), einem auf der Unterseite des Behälters (26) angeordneten Heizelement (24) und einer Einrichtung (22, 23) für die Herstellung einer elektrischen Verbindung mit dem Heizelement (24), **gekennzeichnet durch** eine innerhalb des Außengehäuses (2) fest gesicherte elektrische Anschlußeinrichtung (22), eine zugehörige Anschlußeinrichtung (23) an dem Heizelement (24), um mit der festen elektrischen Anschlußeinrichtung (22) automatisch in Eingriff zu kommen, wenn der Behälter (26) in das Gehäuse (2) eingesetzt wird, und einer thermostatischen Steuervorrichtung (18), die innerhalb des Gehäuses (2) feststehend gesichert ist und ein darauf befindliches Teil (20) aufweist, das mit dem Behälter (26) in Berührung steht, wobei die thermostatische Steuervorrichtung (18) zwischen der feststehenden elektrischen Anschlußeinrichtung (22) und einer feststehenden Eingabestromversorgung (16, 17) mit dem Fritiergerät elektrisch verbunden ist.

2. Fritiergerät nach Anspruch 1, **dadurch gekennzeichnet,** daß eine abtrennbare Verriegelungseinrichtung zwischen dem Behälter (26) und dem Gehäuse (2) vorgesehen ist.

3. Fritiergerät nach Anspruch 1, **dadurch gekennzeichnet**, daß der Behälter (26) durch Vorsehen eines obersten Umfangsflansches (26A) innerhalb des Gehäuses (2) angeordnet ist, um auf der Oberkante des Gehäuses (2) aufzuliegen.

4. Fritiergerät nach Anspruch 3, **dadurch gekennzeichnet**, daß Vertiefungen (38) in gegenüberliegenden Wänden des Behälters (26) gebildet sind, um das Greifen des Behälters zu erleichtern.

5. Fritiergerät nach Anspruch 3, **dadurch gekennzeichnet**, daß Vertiefungen in der Oberkante des Behälters gebildet sind, damit die Finger unterhalb des Umfangsflansches (26A) auf dem Behälter (26) eingreifen können.

6. Fritiergerät nach einem der Ansprüche 1 bis 5, **dadurch gekennzeichnet**, daß die thermostatische Steuervorrichtung (18) eine Sicherungsanordnung (18) ist, wobei die Anordnung des Behälters (26) in dem Gehäuse (2) die Sicherungsanordnung (18) deaktiviert, um zwischen einem Einspeisestromkabel (17) und der Steckdose (22) eine elektrische Verbindung zu schaffen, und die Entfernung des Behälters (26) von dem Gehäuse (2) die Sicherungsanordnung (15) aktiviert, um die Steckdose von dem Eingabestromkabel (17) abzutrennen.

7. Fritiergerät nach einem der Ansprüche 1 bis 6, **dadurch gekennzeichnet**, daß die thermostatische Steuervorrichtung (18) ein einstellbares Thermostat (18, 33) ist, um die Stromquelle an das Heizelement (24) anzupassen.

8. Fritiergerät nach einem der Ansprüche 1 bis 7, **dadurch gekennzeichnet**, daß ein entfernbarer Drahtkorb (32) innerhalb des Behälters (26) vorgesehen ist, wobei der Drahtkorb einen schwenkbaren Griff (31) hat, der mittels Verbindungen (39) an dem Korb angebracht ist, wobei mit dem in dem Behälter angeordneten Korb dieser in das Fett gesenkt werden kann und durch Schwenken des Handgriffs zu einer Ablaufposition angehoben werden kann.

## Revendications

1. Friteuse à immersion, comprenant un carter externe (2) ayant une cavité débouchant à la partie supérieure et qui peut être fermée par un couvercle (3), un réservoir interne amovible (26) placé dans la cavité et dans le carter (2), un dispositif de positionnement du réservoir (26) dans le carter (2), un dispositif destiné à faciliter l'extraction du réservoir (26) du carter (2), un élément de chauffage (24) placé à la face inférieure du réservoir (26), et un dispositif (22, 23) destiné à effectuer la connexion électrique à l'élément de chauffage (24), caractérisée par un dispositif connecteur électrique (22) fixé dans le carter externe (2), un dispositif connecteur coopérant (23) placé sur l'élément de chauffage (24) et destiné à coopérer automatiquement avec le dispositif connecteur électrique fixe (22) lorsque le réservoir (26) est introduit dans le carter (2), et un dispositif de commande thermostatique (18) fixé dans le carter (2) et ayant une partie (20) qui est au contact du réservoir (26), le dispositif de commande thermostatique (18) étant connecté électriquement entre le dispositif connecteur électrique fixe (22) et une alimentation électrique fixe (16, 17) de la friteuse à immersion.

2. Friteuse selon la revendication 1, caractérisée en ce qu'un dispositif de blocage qui peut être déconnecté est placé entre le réservoir (26) et le carter (2).

3. Friteuse selon la revendication 1, caractérisée en ce que le réservoir (26) est placé dans le carter (2) par appui d'un flasque périphérique supérieur (26A) au bord supérieur du carter (2).

4. Friteuse selon la revendication 3, caractérisée en ce que des cavités (38) sont formées dans les parois opposées du réservoir (26) afin que la saisie du réservoir soit facile.

5. Friteuse selon la revendication 3, caractérisée en ce que les organes d'encliquetage sont formés au bord supérieur du carter afin qu'ils permettent à des doigts de saisir le flasque périphérique (26A) du réservoir (26) par passage sous ce flasque.

6. Friteuse selon l'une quelconque des revendications 1 à 5, caractérisée en ce que le dispositif de commande thermostatique (18) est un ensemble à interrupteur (18) tel que la disposition du réservoir (26) dans le carter (2) commande l'ensemble à interrupteur (18) afin que la connexion électrique soit assurée entre un câble d'alimentation (17) et la douille (22) et que l'extraction du réservoir (26) du carter (2) commande l'ensemble à interrupteur (18) afin qu'il déconnecte la douille du câble d'alimentation (17).

7. Friteuse selon l'une quelconque des revendications 1 à 6, caractérisée en ce que le dispositif de commande thermostatique (18) est un thermostat réglable (18, 33) destiné à ajuster l'alimentation de l'élément de chauffage (24).

8. Friteuse selon l'une quelconque des revendications 1 à 7, caractérisée en ce qu'un panier amovible (32) de fils métalliques est placé dans le réservoir (26), ce panier ayant une poignée pivotante (31) fixée au panier par des articulations (39), si bien que, lorsque le panier est placé dans le réservoir, il peut être descendu dans la matière grasse et peut être soulevé en position d'égouttage par pivotement de la poignée.
